# EUROPÄISCHE PATENTANMELDUNG

(11) **EP 3 403 896 A1**
(43) Veröffentlichungstag der Anmeldung: **21.11.2018**
(21) Anmeldenummer: 18163217.5
(22) Anmeldetag: 22.03.2018
(51) Int. Cl.: B60W 50/00

(54) **SYSTEM UND VERFAHREN ZUR HANDHABUNG VON AUSNAHMESZENARIEN**

(30) Priorität: 19.05.2017 DE 102017004826
(71) Anmelder: Lucas Automotive GmbH, 56070 Koblenz (DE)
(72) Erfinder: Schneider, Georg, 56182 Urbar (DE); Kraus, Guido, 54533 Greimerath (DE); Mungenast, Philipp, 56410 Montabaur (DE)
(74) Vertreter: Schmidt, Steffen J.

(57) **Zusammenfassung**

Eine Steuerung zur Beeinflussung wenigstens eines einem eigenen Kraftfahrzeug zugeordneten Fahrerassistenz- oder Komfortsystems, wenn sich das Kraftfahrzeug in einem Ausnahmeszenario befindet, wobei eine Umfeldsensorik dem Fahrerassistenz- oder Komfortsystem Informationen liefert über das Fahrzeugumfeld und/oder die Verkehrssituation, in der sich das eigene Kraftfahrzeug befindet; dieses Fahrerassistenz- oder Komfortsystem in Fahr- oder Gefahrensituationen auch auf die Längs- und/oder Querführung des Kraftfahrzeugs Einfluss nimmt; und zum Erkennen eines Ausnahmeszenarien das Steuerungssystem die Informationen aus der Umfeldsensorik und/oder eine durch den Fahrer des Kraftfahrzeugs zu betätigende Schalteinrichtung auswertet, um basierend auf dieser Auswertung das wenigstens eine Fahrerassistenz- oder Komfortsystem zumindest zeitweise in seiner Funktionalität abzuschalten, zu unterdrücken oder zu reduzieren.

## Beschreibung

### Hintergrund

Hier werden ein System zur Handhabung von Ausnahmeszenarien in einem Kraftfahrzeug und ein entsprechendes Verfahren offenbart. Dieses System und das Verfahren sind insbesondere einsetzbar, um in Kraftfahrzeugen mit Fahrerassistenzsystemen oder Komfortsystemen den Fahrer in Ausnahmeszenarien zu unterstützen. Details hierzu sind in den Ansprüchen definiert; auch die Beschreibung und die Zeichnung enthalten relevante Angaben zum System und zur Funktionsweise sowie zu Varianten des Systems und des Verfahrens.

### Technischer Bereich

Fahrerassistenzsysteme nehmen auf Basis von Signalen aus Umfeldsensoren wie Radar-, Lidar-, Video und/oder Ultraschall-Empfängern das Fahrzeugumfeld wahr und werten es aus. Sie unterstützen den Fahrer in vielen Fahrsituationen und erhöhen dadurch den Fahrkomfort. Sie erlauben ein stressfreieres und komfortableres Fahren, Einparken und Rangieren des Kraftfahrzeugs. So hilft zum Beispiel ein Stauassistent dem Fahrer, auch bei dichtem Verkehr oder im Stau entspannt ans Ziel zu kommen. Als teilautomatisierte Komfortfunktion übernimmt das System die Längs- und Querführung des Kraftfahrzeugs, es kann automatisch anfahren, beschleunigen und bremsen und in auch Grenzen selbsttätig lenken. ACC (Adaptive Cruise Control) unterstützt zum Beispiel den Fahrer, den Sicherheitsabstand zum vorausfahrenden Kraftfahrzeug einzuhalten. Während der Fahrt hält die ACC eine vom Fahrer vorgegebene Geschwindigkeit oder kann diese durch selbsttätiges Gaswegnehmen, Bremsen oder Beschleunigen wechselnden Verkehrsbedingungen anpassen. In manchen Varianten kann das System das Kraftfahrzeug auch selbsttätig bis zum Stillstand abbremsen und nach Freigabe durch den Fahrer automatisch wieder anfahren. Ein Umfeldbeobachtungssystem erkennt zum Beispiel mittels Radar-/Laser-Sensor auch kritische Abstandssituationen und hilft, den Anhalteweg des Kraftfahrzeugs zu verkürzen. In Ausnahme- oder Gefahrensituationen warnt das System den Fahrer optisch, akustisch oder haptisch. Die vorstehenden Beispiele sind nicht abschließend; allen derartigen Fahrerassistenzsystemen oder Komfortsystemen ist jedoch eigen, dass sie für bestimmte Fahr- oder Gefahrensituationen gedacht sind. Sofern sich das Kraftfahrzeug in einer Ausnahmesituation befindet, für die es eigentlich nicht regelmäßig bestimmt ist, ist nur schwer vorhersehbar, wie sich das Fahrerassistenzsystem oder Komfortsystem auf den Betrieb des Kraftfahrzeugs auswirkt.

In Ausnahmeszenarien, wie zum Beispiel: das Kraftfahrzeug befindet sich in einer Waschstraße, oder in einer Fähre oder einem Autozug, in einer beengten Parkhaussituation, das Fahrzeug soll im Rahmen einer Pannenhilfe abgeschleppt werden, oder dergl., führen diese Fahrerassistenzsystemen oder Komfortsysteme dazu, dass ihnen ihre Umfeldsensoren eine Situation vorgeben und die Auswertelogik dieser Fahrerassistenzsystemen oder Komfortsysteme eine Aktion auslöst, die nicht dem entspricht, was der Fahrer in dieser Situation wünscht. Dies kann in Einzelfällen lästig, aber auch unangenehm oder gar gefährlich werden und auch zu Schäden am Fahrzeug führen. So kann zum Beispiel bei einem Kraftfahrzeug mit einem Kollisionsvermeidungssystem (CAS) in einer Waschstraße dem Radarsensor durch die dicht vor ihm rotierenden Waschbürsten ein vermeintliches Hindernis vorgegeben werden. Die Signalauswertung der Radarsignale durch die Auswertelogik des Kollisionsvermeidungssystems bewirkt, dass die Räder des Fahrzeugs gebremst oder gar blockiert werden. So wird verhindert, dass das Fahrzeug mit eigenem Antrieb durch die Waschstraße fahren kann. Auch beim Abschleppen im Pannenfall kann zum Beispiel das schleppende Kraftfahrzeug für das Kollisionsvermeidungssystem des eigenen Kraftfahrzeugs ein vermeintliches Hindernis darstellen, weshalb das Fahrerassistenzsystem die Räder des geschleppten Fahrzeugs bremst oder blockiert. Ein weiteres Fahrerassistenzsystem blockiert automatisch die Räder des Fahrzeugs, wenn dieses für eine kurze Zeit, zum Beispiel mehrere Sekunden, still steht. Dies sind nur einige Beispiele, in denen sich das Fahrerassistenzsystem oder Komfortsystem nachteilig auf den Betrieb des Fahrzeugs auswirkt. Ein Abschalten, Unterdrücken oder Reduzieren des Funktionsumfangs derartiger Fahrerassistenzsysteme oder Komfortsysteme ist angesichts der zunehmenden Zahl dieser Systeme und deren Einbettung in die Elektronik des Fahrzeugs für den Fahrer nicht immer einfach; schon das Wissen über das Vorhandensein dieser einzelnen Systeme und deren mögliche oder tatsächliche (Fehl-)Eingriffe ist beim Fahrer nicht immer vorhanden. Auch das Auffinden dieser Systeme in der Menüstruktur des Fahrzeuginformationssystems kann eine Herausforderung darstellen. Dies gilt umso mehr, als die Auswahl aus zunehmend umfangreichen Angeboten des Fahrzeuginformationssystems unter dem Zeitdruck der Ausnahmesituation erheblichen Stress beim Fahrer auslösen kann.

### Zugrundeliegendes Problem

Angesichts der zunehmenden Verbreitung und der Komplexität von Fahrerassistenzsysteme oder Komfortsysteme greifen diese in vermehrtem Umfang unerwartet, fehlerhaft oder störend außerhalb der zum Eingriff vorgesehenen Szenarien in die Funktionalität des Fahrzeugs ein; dies gilt es zu verringern oder zu verhindern.

### Vorgeschlagene Lösung

Hierzu wird ein Steuerungssystem vorgeschlagen zur Beeinflussung wenigstens eines einem eigenen Kraftfahrzeug zugeordneten Fahrerassistenz- oder Komfortsystems, wenn sich das Kraftfahrzeug in einem Ausnahmeszenario befindet. Dabei hat das Kraftfahrzeug eine Umfeldsensorik, um dem Fahrerassistenz- oder Komfortsystem Informationen zu liefern über das Fahrzeugumfeld und/oder die Verkehrssituation, in der sich das eigene Kraftfahrzeug befindet. Dieses Fahrerassistenz- oder Komfortsystem ist dazu eingerichtet, in Fahr- oder Gefahrensituationen auch auf die Längs- und/oder Querführung des Kraftfahrzeugs Einfluss zu nehmen. Das Steuerungssystem ist dazu eingerichtet, zum Erkennen eines Ausnahmeszenarios die Informationen aus der Umfeldsensorik und/oder eine durch den Fahrer des Kraftfahrzeugs zu betätigende Schalteinrichtung auszuwerten, um basierend auf dieser Auswertung das wenigstens eine Fahrerassistenz- oder Komfortsystem zumindest zeitweise in seiner Funktionalität abzuschalten, zu unterdrücken oder zu reduzieren.

### Weitere Ausgestaltungen und vorteilhafte Weiterbildungen

Das Steuerungs-System ist in einer Variante dazu eingerichtet und bestimmt, dass mittels der durch den Fahrer des Kraftfahrzeugs zu betätigenden Schalteinrichtung alle dem eigenen Kraftfahrzeug zugeordneten Fahrerassistenz- oder Komfortsysteme zumindest zeitweise in ihrer Funktionalität abzuschalten, zu unterdrücken oder zu reduzieren sind.

In einer weiteren Variante ist das Steuerungssystem dazu eingerichtet und bestimmt, das wenigstens eine Fahrerassistenz- oder Komfortsystem zumindest soweit in seiner Funktionalität abzuschalten, zu unterdrücken oder zu reduzieren, als dieses auf die Längs- oder Querführung des Kraftfahrzeugs ist durch Signalisierungen an Lenk-, Beschleunigungs-, und/oder Verzögerungseinrichtungen des Kraftfahrzeugs Einfluss nimmt. Damit werden zum Beispiel akustische / optische / haptische Hinweise an den Fahrer weiterhin ausgegeben. Dies lässt den Fahrer das Vorliegen eines Ausnahmeszenarien erkennen, ohne dass deshalb der Fahrbetrieb des Kraftfahrzeugs tangiert ist. Mithin werden zum Beispiel von einem Kollisionsvermeidungssystem in einer Waschstraße zwar von dem Radarsensor durch die dicht vor ihm rotierenden Waschbürsten ein vermeintliches Hindernis vorgegeben. Dieses vermeintliche Hindernis wird dem Fahrer auch zum Beispiel akustisch signalisiert. Allerdings wird durch das das Steuerungssystem durch einen entsprechenden Eingriff / ein Signal in das Kollisionsvermeidungssystem verhindert, dass die Bremsen des Kraftfahrzeugs betätigt werden.

In einer weiteren Variante ist das Steuerungssystem dazu eingerichtet und bestimmt, die Informationen aus der Umfeldsensorik unabhängig von dem wenigstens einen Fahrerassistenz- oder Komfortsystem zum Erkennen eines Ausnahmeszenarien auszuwerten und zu plausibilisieren, um basierend auf dieser Auswertung und Plausibilisierung das wenigstens eine Fahrerassistenz- oder Komfortsystem zumindest zeitweise in seiner Funktionalität abzuschalten, zu unterdrücken oder zu reduzieren. Hierzu kann das Steuerungssystem mehr Informationen aus der Umfeldsensorik erhalten als jedes der einzelnen Fahrerassistenz- oder Komfortsysteme, um basierend auf diesen Informationen das Vorliegen eines Ausnahmeszenarien zu plausibilisieren.

Schließlich wird ein Steuerungsverfahren vorgeschlagen zur Beeinflussung wenigstens eines einem eigenen Kraftfahrzeug zugeordneten Fahrerassistenz- oder Komfortsystems, wenn sich das Kraftfahrzeug in einem Ausnahmeszenario befindet, wobei eine Umfeldsensorik dem Fahrerassistenz- oder Komfortsystem Informationen liefert über das Fahrzeugumfeld und/oder die Verkehrssituation, in der sich das eigene Kraftfahrzeug befindet; dieses Fahrerassistenz- oder Komfortsystem in Fahr- oder Gefahrensituationen auch auf die Längs- und/oder Querführung des Kraftfahrzeugs Einfluss nimmt; und zum Erkennen eines Ausnahmeszenarien das Steuerungssystem die Informationen aus der Umfeldsensorik und/oder eine durch den Fahrer des Kraftfahrzeugs zu betätigende Schalteinrichtung auswertet, um basierend auf dieser Auswertung das wenigstens eine Fahrerassistenz- oder Komfortsystem zumindest zeitweise in seiner Funktionalität abzuschalten, zu unterdrücken oder zu reduzieren.

### Kurzbeschreibung der Zeichnung

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei zeigen alle beschriebenen und / oder bildlich dargestellten Merkmale für sich oder in beliebiger Kombination den hier offenbarten Gegenstand, auch unabhängig von ihrer Gruppierung in den Ansprüchen oder deren Rückbeziehungen. Die Abmessungen und Proportionen der in den Fig. gezeigten Komponenten sind hierbei nicht unbedingt maßstäblich; sie können bei zu implementierenden Ausführungsformen vom hier Veranschaulichten abweichen.

### Detaillierte Beschreibung der Zeichnungen

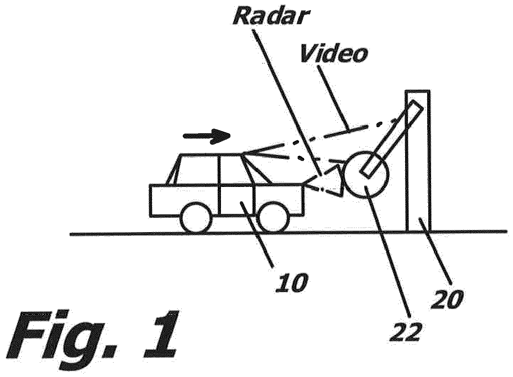

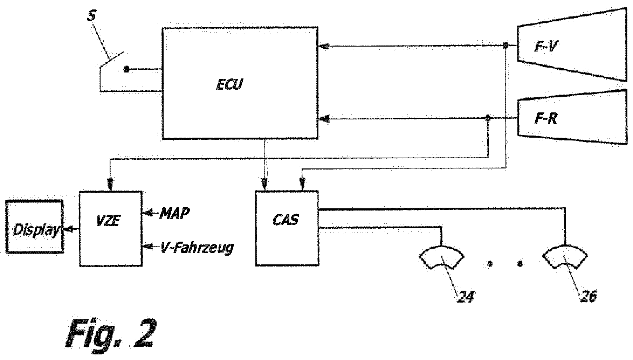

In Fig. 1 ist schematisch eine Fahrsituation gezeigt, bei der ein eigenes (Kraft-)Fahrzeug 10 einen in eine Waschstraße 20 einfahren möchte. Das Kraftfahrzeug 10 ist in der veranschaulichten Variante mit einer Verkehrszeichenerkennung VZE und einem Kollisionsvermeidungssystem CAS als Fahrerassistenz- / Komfortsysteme ausgestattet (Siehe auch Fig. 2). Hierzu hat das Kraftfahrzeug 10 eine Umfeldsensorik, um den Fahrerassistenz- oder Komfortsystemen Informationen zu liefern über das Fahrzeugumfeld und/oder die Verkehrssituation, in der sich das eigene Kraftfahrzeug befindet. Die Umfeldsensorik umfasst in einer Variante hier nicht weiter veranschaulichte Radarsensoren und (Infrarot- und Tageslicht-)(Video-)Kameras, mit denen die Umfeldsituation vor und seitlich des Fahrzeugs 10 erfasst und ausgewertet wird. Mit dieser Umfeldsensorik wird die Situation des eigenen Fahrzeuges 10 ermittelt und einem Steuerungssystem ECU fortlaufend bereitgestellt. Das Steuerungssystem hat zur Beeinflussung dieser dem Kraftfahrzeug zugeordneten Fahrerassistenz- oder Komfortsysteme, für den Fall, dass sich das Kraftfahrzeug in einem Ausnahmeszenario befindet, eine Auswerteelektronik ECU zum Erkennen des Ausnahmeszenarios. Die Auswerteelektronik ECU ist so wie in Fig. 2 als separate Komponente ausgestaltet. Sie kann aber auch in einer der sonstigen elektronischen Steuerungen in dem Kraftfahrzeug implementiert sein. Das Steuerungssystem ECU umfasst einen nicht näher veranschaulichten Rechner, Programm-/Daten-Speicher, Ein-/Ausgabeeinrichtungen, etc. In der vorliegenden Variante ist die Verkehrszeichenerkennung VZE videobasiert und das Kollisionsvermeidungssystem CAS ist radarbasiert. Hierzu hat das Kraftfahrzeug 10 eine Front-Videokamera F-V und einen Front-Radar- Sende-Empfänger F-R, deren Signale der Verkehrszeichenerkennung VZE bzw. dem Kollisionsvermeidungssystem CAS zugeführt werden.

Die Verkehrszeichenerkennung VZE liefert als Fahrerassistenz- und Komfortsystem in Echtzeit Information über die wichtigsten Ge- und Verbotshinweise entlang der Fahrstrecke des Kraftfahrzeugs 10. Hierzu erfasst die Verkehrszeichenerkennung VZE mit der Video-Kamera die relevanten Verkehrszeichen und bildet sie je nach Fahrzeugausstattung in der Multifunktionsanzeige, im Display des Radio- und Navigationssystems und/oder im Head-up-Display des Kraftfahrzeugs 10 ab. Angezeigt werden beispielsweise Geschwindigkeitsbegrenzungen, Ortsausgangsschilder, Überholverbote sowie Zusatzzeichen und die entsprechenden Aufhebungszeichen. Dabei verarbeitet die Verkehrszeichenerkennung VZE drei Quellen an Informationen: die von der Kamera erfassten Verkehrszeichen, Informationen des Navigationsgeräts MAP und aktuelle Fahrzeugdaten in Form der Fahrzeuggeschwindigkeit V-Fahrzeug.

Das Kollisionsvermeidungssystem CAS nimmt als Fahrerassistenzsystem in Gefahrensituationen auch auf die Längs- und/oder Querführung des Kraftfahrzeugs 10 Einfluss, indem es die Bremsen 24 ... 26 der Räder des Kraftfahrzeugs 10 betätigt, sofern mit der Front-Radar-Sende-Empfänger F-R ein Hindernis dicht vor dem des Kraftfahrzeug 10 erkennt.

Um Ausnahmeszenarien, zum Beispiel das Kraftfahrzeug soll in ein Autowaschanlage oder in eine Fähre oder einen Autozug einfahren, das Kraftfahrzeug soll in einer beengten Parkhaussituation manövrieren, das Fahrzeug soll im Rahmen einer Pannenhilfe abgeschleppt werden, oder dergl. zu behandeln, wertet in einer Variante die Auswerteelektronik ECU die Informationen aus der Umfeldsensorik aus, um basierend auf dieser Auswertung das eine Fahrerassistenz- oder Komfortsystem in seiner Funktionalität abzuschalten, zu unterdrücken oder zu reduzieren.

In einer alternativen oder zusätzlichen Variante wertet die Auswerteelektronik ECU eine durch den Fahrer des Kraftfahrzeugs zu betätigende Schalteinrichtung S aus, die der Fahrer betätigen kann, um zu bewirken, dass das Fahrerassistenz- oder Komfortsystem in seiner Funktionalität abgeschaltet, unterdrückt oder reduziert wird.

Das Steuerungssystem wertet zum Erkennen von Ausnahmeszenarien die Informationen aus der Umfeldsensorik unabhängig von dem einen Fahrerassistenz- oder Komfortsystem aus und plausibilisiert diese. Zum Beispiel in dem Kollisionsvermeidungssystem CAS signalisiert die Auswertung der Radarsignale beim Versuch, in eine Waschanlage einzufahren, die Waschbürsten vor dem Kraftfahrzeug als Hindernis. Demzufolge würde dann die Betätigung der Bremsen des Kraftfahrzeugs erfolgen. Die Auswerteelektronik ECU ist jedoch basierend auf den Daten aus der Videokamera in der Lage, die Waschanlage und deren Waschbürsten vor dem Kraftfahrzeug zu erkennen und im Rahmen einer Plausibilisierung dieses Ausnahmeszenario zu erkennen. Basierend auf dieser Auswertung und Plausibilisierung bewirkt dann die Auswerteelektronik ECU, dass das Kollisionsvermeidungssystem CAS in seiner Funktionalität soweit reduziert wird, dass die Bremsen zur Verhinderung einer Kollision mit den Waschbürsten nicht betätigt werden. So kann das Kraftfahrzeug 10 in üblicher Weise durch die Waschanlage gefahren werden. Somit erhält das Steuerungssystem mehr Informationen aus der Umfeldsensorik als jedes der einzelnen Fahrerassistenz- oder Komfortsysteme, um basierend auf diesen Informationen das Vorliegen eines Ausnahmeszenarien zu plausibilisieren.

Anstelle der aufwendigen Auswertung und Plausibilisierung der Informationen aus der Umfeldsensorik und dem darauf basierten Abschalten, Unterdrücken oder Reduzieren der Funktionalität des Fahrerassistenz- oder Komfortsystems kann auch der Fahrer mithilfe des Schalters S das oder alle Fahrerassistenz- oder Komfortsysteme des Kraftfahrzeugs in ihrer Funktionalität abschalten, unterdrücken oder reduzieren.

Die vorangehend beschriebenen Varianten sowie deren Aufbau- und Betriebsaspekte dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist / sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Varianten zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Ein Steuerungssystem zur Beeinflussung wenigstens eines einem eigenen Kraftfahrzeug zugeordneten Fahrerassistenz- oder Komfortsystems, wenn sich das Kraftfahrzeug in einem Ausnahmeszenario befindet, wobei
- das Kraftfahrzeug eine Umfeldsensorik aufweist, um dem Fahrerassistenz- oder Komfortsystem Informationen zu liefern über das Fahrzeugumfeld und/oder die Verkehrssituation, in der sich das eigene Kraftfahrzeug befindet;
- dieses Fahrerassistenz- oder Komfortsystem dazu eingerichtet ist, in Fahr- oder Gefahrensituationen auch auf die Längs- und/oder Querführung des Kraftfahrzeugs Einfluss zu nehmen;
**dadurch gekennzeichnet, dass**
- das Steuerungssystem dazu eingerichtet ist, zum Erkennen eines Ausnahmeszenarien die Informationen aus der Umfeldsensorik und/oder eine durch den Fahrer des Kraftfahrzeugs zu betätigende Schalteinrichtung auszuwerten, um basierend auf dieser Auswertung das wenigstens eine Fahrerassistenz- oder Komfortsystem zumindest zeitweise in seiner Funktionalität abzuschalten, zu unterdrücken oder zu reduzieren.

2. Das Steuerungssystem nach Anspruch 1, bei dem mittels der durch den Fahrer des Kraftfahrzeugs zu betätigenden Schalteinrichtung alle dem eigenen Kraftfahrzeug zugeordneten Fahrerassistenz- oder Komfortsysteme zumindest zeitweise in ihrer Funktionalität abzuschalten, zu unterdrücken oder zu reduzieren sind.

3. Das Steuerungssystem nach Anspruch 1 oder 2, bei dem das wenigstens eine Fahrerassistenz- oder Komfortsystem zumindest soweit in seiner Funktionalität abzuschalten, zu unterdrücken oder zu reduzieren ist, als dieses auf die Längs- oder Querführung des Kraftfahrzeugs ist durch Signalisierungen an Lenk-, Beschleunigungs-, und/oder Verzögerungseinrichtungen des Kraftfahrzeugs Einfluss nimmt.

4. Das Steuerungssystem nach einem der vorhergehenden Ansprüche, bei dem das Steuerungssystem die Informationen aus der Umfeldsensorik unabhängig von dem wenigstens einen Fahrerassistenz- oder Komfortsystem zum Erkennen eines Ausnahmeszenarien auswertet und plausibilisiert, um basierend auf dieser Auswertung und Plausibilisierung das wenigstens eine Fahrerassistenz- oder Komfortsystem zumindest zeitweise in seiner Funktionalität abzuschalten, zu unterdrücken oder zu reduzieren.

5. Das Steuerungssystem nach einem der vorhergehenden Ansprüche, bei dem das Steuerungssystem mehr Informationen aus der Umfeldsensorik erhält als jedes der einzelnen Fahrerassistenz- oder Komfortsysteme, um basierend auf diesen Informationen das Vorliegen eines Ausnahmeszenarien zu plausibilisieren.

6. Ein Steuerungsverfahren zur Beeinflussung wenigstens eines einem eigenen Kraftfahrzeug zugeordneten Fahrerassistenz- oder Komfortsystems, wenn sich das Kraftfahrzeug in einem Ausnahmeszenario befindet, wobei
- eine Umfeldsensorik dem Fahrerassistenz- oder Komfortsystem Informationen liefert über das Fahrzeugumfeld und/oder die Verkehrssituation, in der sich das eigene Kraftfahrzeug befindet;
- dieses Fahrerassistenz- oder Komfortsystem in Fahr- oder Gefahrensituationen auch auf die Längs- und/oder Querführung des Kraftfahrzeugs Einfluss nimmt; und
- zum Erkennen eines Ausnahmeszenarien das Steuerungssystem die Informationen aus der Umfeldsensorik und/oder eine durch den Fahrer des Kraftfahrzeugs zu betätigende Schalteinrichtung auswertet, um basierend auf dieser Auswertung das wenigstens eine Fahrerassistenz- oder Komfortsystem zumindest zeitweise in seiner Funktionalität abzuschalten, zu unterdrücken oder zu reduzieren.
